Europäisches Patentamt

European Patent Office

Office européen des brevets

(19)

(11) **EP 0 417 593 B1**

(12) **EUROPEAN PATENT SPECIFICATION**

(45) Date of publication and mention
of the grant of the patent:
**24.07.1996  Bulletin 1996/30**

(51) Int Cl.$^6$: **G05B 13/04**

(21) Application number: **90116891.4**

(22) Date of filing: **03.09.1990**

(54) **Process control device**

Prozesssteuerungsgerät

Dispositif de commande de processus

(84) Designated Contracting States:
**GB NL**

(30) Priority: **13.09.1989  JP  238222/89**
**26.09.1989  JP  249927/89**

(43) Date of publication of application:
**20.03.1991  Bulletin 1991/12**

(73) Proprietor: **Yokogawa Electric Corporation**
**Tokyo 180 (JP)**

(72) Inventors:
• **Takatsu, Haruo**
**Kodaira-shi, Tokyo (JP)**
• **Kitano, Kinichi**
**Mitaka-shi, Tokyo (JP)**

(74) Representative: **Henkel, Feiler, Hänzel & Partner**
**Möhlstrasse 37**
**81675 München (DE)**

(56) References cited:
**GB-A- 2 086 082**

• **Proceedings of the IFAC: 6th world congress
vol. 1, 1975, PITTSBURGH US pages 1 - 9; B.
COURTIOL: "APPLYING MODEL REFERENCE
ADAPTIVE TECHNIQUES FOR THE CONTROL
OF ELECTROMECHANICAL SYSTEMS"**
• **VDI ZEITSCHRIFT. vol. 125, no. 7, April 1983,
DUSSELDORF DE page 232 S. BERGMANN:
"DIGITALE PARAMETERADAPTATIVE
REGELUNG MIT MIKRORECHNER"**
• **ADAPTIVE CONTROL, K.J. Aström & B.
Wittemark, May 1989, Addison- Wesley
publishing company, pp.443-458**
• **DATABASE INSPEC, Operations Research
Society of America 41st annual meeting, New
orleans USA, 26-28 April 1972, K.A. Fegley, J.F.
Burns, R.M. Hollis "Process identification via
mathematical programming"**

**Description**

BACKGROUND OF THE INVENTION

Field of Invention

This invention relates to a process control device which controls a process, and in particular to a process a control device which has a function to automatically adjust control constant such as a proportional constant (P) and an integral constant (I) to an optimum value. This invention relates in still more detail to a process control device having a process model internally to estimate a dynamic characteristic of the process to be controlled, wherein PI operation parameters are determined based upon the estimate result by the process model (self-adaptive controller).

Description of the Prior Art

In order to control a process to an optimum condition, it is necessary to search the dynamic characteristic of the process and to calculate the control operation parameters (constants) for calculation of the manipulated variable. An open loop type, a limit sensitivity type, a response waveform type, an adaptive control type, a type equipped with process model are known for these process control devices.

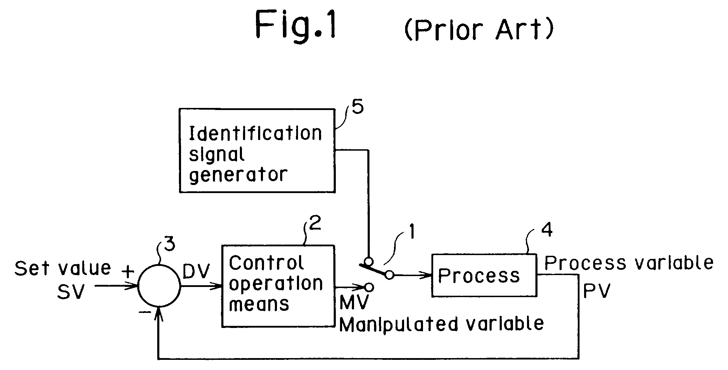

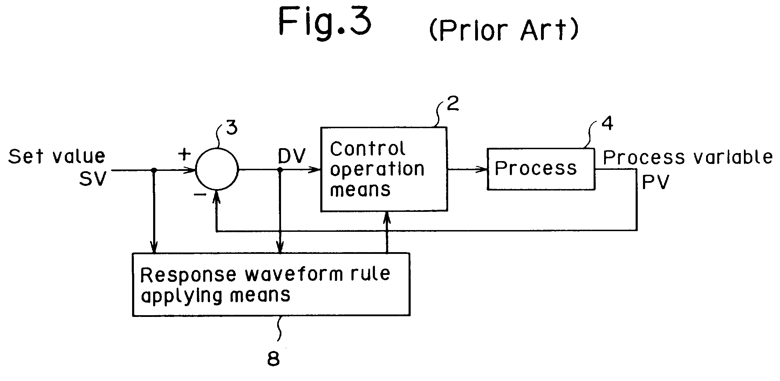

Figs. 1 to 5 are block diagrams which show the configuration of the conventional apparatus.

Fig. 1 shows a conventional process control device of the open loop type. In normal control state, a switch 1 is connected to control operation means 2. Both set value SV and process variable PV are inputted to deviation operation means 3 in which the deviation between these input signals is calculated. The deviation signal is inputted to the control operation means 2 in which the manipulated variable is calculated by using PID operation parameter, and the obtained manipulated variable is outputted to a process 4.

The switch 1 is connected to an identification signal generator 5 periodically or when the deviation becomes large, and a step signal like a pulse signal is outputted from the identification signal generator 5 to the process 4 as an identification signal. Based upon the response from the process 4, control operation parameters are calculated in accordance with Ziegler-Nichols method etc. and set to the control operation means 2.

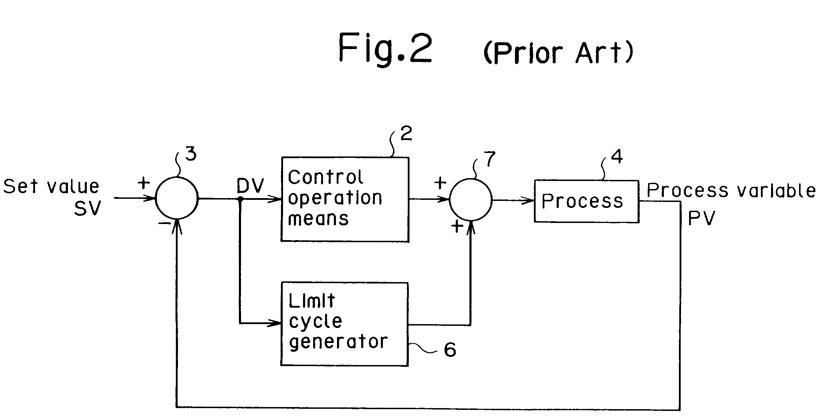

Fig. 2 shows a conventional process control device of the limit sensitivity type. A deviation signal from the deviation operation means 3 is applied to the control operation means 2 and a limit cycle generator 6. Adding means 7 adds outputs of control operation means 2 and limit cycle generator 6, and supplies an output signal to the process 4 as a manipulated variable.

The limit cycle generator 6 functions to change the manipulated variable outputted to the process 4 to a maximum value and to a minimum value periodically. Based upon the limit cycle or limit sensitivity at that time, the control operation parameters are calculated in accordance with Ziegler-Nichols method etc. and is set to the control operation means 2.

Fig. 3 shows a conventional process control device of the response waveform type (for example, US-A-4,602,326). To response waveform rule applying means 8, set value SV and deviation DV are applied. The response waveform rule applying means 8 is configured by such a tuning rule as Fuzzy rule etc. The control operation parameters are obtained by applying these rules to the overshoot of the process quantity, the attenuation ratio, the attenuation period, etc., and obtained parameters are set in control operation means 2.

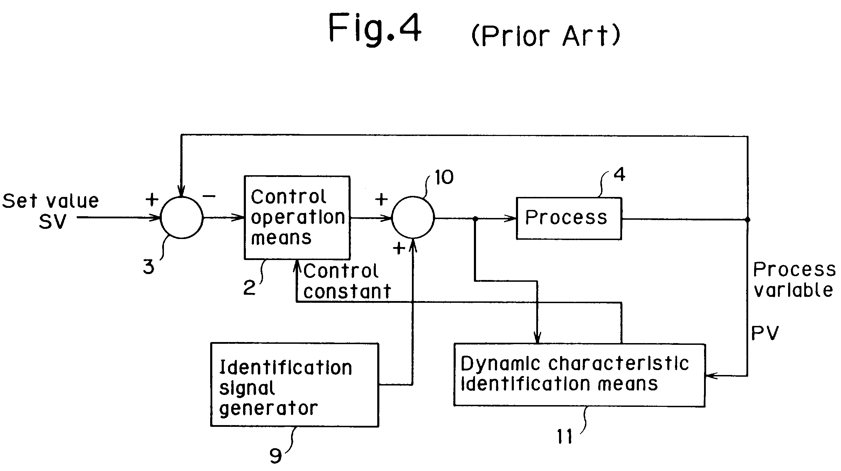

Fig. 4 shows a conventional process control device of the adaptive control type. Adding means 10 adds outputs of the control operation means 2 and an identification signal generator 9, and generates an output to the process 4. Further, dynamic characteristic identification means 11 receives the process variable and the output of the adding means 10, estimates control operation parameters, and sets the estimated parameters in control operation means 2. That is, a very small disturbance is generated in the identification signal generator 9. The control operation parameter is obtained from the dynamic characteristic of the process variable at that time and the obtained result is set in the control operation means 2.

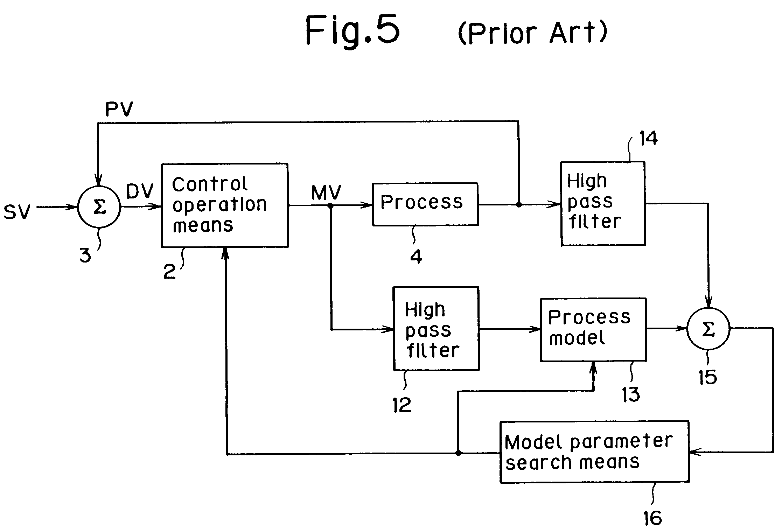

Fig. 5 shows the conventional process control device of the type equipped with a process model 13 (e.g., ISA Transaction Vol. 22, No. 3, p. 50, 51, and US-A-4,385,326). A signal from the control operation means 2 is outputted to the process 4 and also applied to the process model 13 through a high pass filter 12. The process model 13 modeling the process 4 is so configured that its parameters can be changed. Difference operation means 15 calculates the difference between the signal applied from the process 4 through a high pass filter 14 and the signal applied from the process model 13. Model parameter search means 16 receives a difference signal from difference operation means 15, and searches parameters that makes the difference signal minimum. The searched parameters are set as the parameters of the process model 13. Based on the parameters searched by the model parameter search means 16, control operation parameters are obtained, and the obtained control operation parameters are set in the control operation means 2.

The above explained conventional process control device has following problems.

That is, the open loop type and the adaptive control type apparatus must give the identification signals to the process, and the limit sensitivity type apparatus must generate a persistent oscillation. In these types, a disturbance is applied to the process, and therefore, in case when we would obtain the control constant while the process control device is in operation, there occur many restrictions.

Further, in the responsive waveform type, several times of waveform observation are necessary until the control operation parameters are settled, and therefore, it needs a certain time.

Accordingly, either of these control devices could not set freely the control operation parameters.

Further, in the type equipped with the process model, the calculation is carried out continuously at model parameter search means 16, and thus, the amount of calculation increases as the whole. As the result, it has such a drawback that the load of a microprocessor becomes heavy when the function of each part is executed in accordance with the program installed in the microprocessor.

Prior art document GB-A-2 086 082 describes a process control wherein a controller is response to a set point signal to control a process and a model of this process. A sequencer carries out a cycle in which step changes are made in the desired set point for the process, by a predetermined value, above and below the desired set point. A parameter identifier modifies the parameters of the process model and of the controller. In this process control, the cycle is repeated until the change in the values of the parameters between adjacent cycles is less than a predetermined about whereupon it is terminated.

In prior art document ADAPTIVE CONTROL K. J. Aström & B. Wittemark May 1989, Addison-Wesley publishing Company, pp. 443 to 458, it is described that in an adaptive control with an estimator the value of the changes of a control signal and a process output can be used as criteria for deciding whether the parameters of a model are convenient or not.

Finally, prior art document DATABASE INSPEC: Operations Research Society of America 41st annual meeting, New Orleans, USA, 26-28 April 1972, K. A. FEGLEY, J. F. BURNS, R. M. HOLLIS "Process identification via mathematical programming", discloses that it is known to use the simplex method in order to determine a mathematical model of a process.

## SUMMARY OF THE INVENTION

A main object of this invention is to provide a process control device (self-adaptive controller) wherein control constant can be reset in a short time without giving disturbance to process. Another object of this invention is to provide a process control device (self-adaptive controller) wherein the amount of calculation can be reduced and the load of the microprocessor can be minimized.

To solve this object the present invention provides a self-adaptive controller as specified in claim 1.

## BRIEF DESCRIPTION OF DRAWINGS.

Figs. 1 to 5 are block diagrams which show the structure of conventional apparatus.

Fig. 6 is a structural diagram which shows one embodiment of a process control device in accordance with the invention.

Fig. 7 is a flowchart to explain function of the apparatus in Fig. 6.

Figs. 8 and 9 are diagrams of characteristic curves to explain the function of the embodiment of Fig. 6.

Figs. 10 and 11 are diagrams which show respectively configuration and function of another embodiment in accordance with the invention.

Fig. 12 is a flowchart of search method which uses simplex method.

Fig. 13 is a block diagram which shows a main part of another embodiment in accordance with the invention.

Fig. 14 is a waveform diagram which shows the change of process variable when a step like manipulated variable is applied to process.

Fig. 15 is a flowchart which shows the function of the apparatus in Fig. 13.

Fig. 16 is a waveform diagram which shows the change of process variable in other case when the step like manipulated variable is applied to the process.

Fig. 17 is a structural block diagram of still other embodiment in accordance with the invention.

Fig. 18 is a flowchart which shows function of the apparatus in Fig. 17.

Fig. 19 is a waveform diagram which shows the change of the process variable when a step like signal is applied to the manipulating signal.

Fig. 20 is a structural block diagram which shows still other embodiment in accordance with the invention.

Fig. 21 is a flowchart which shows tuning action in the embodiment in Fig. 20.

DETAILED DESCRIPTION OF PREFERRED EMBODIMENTS.

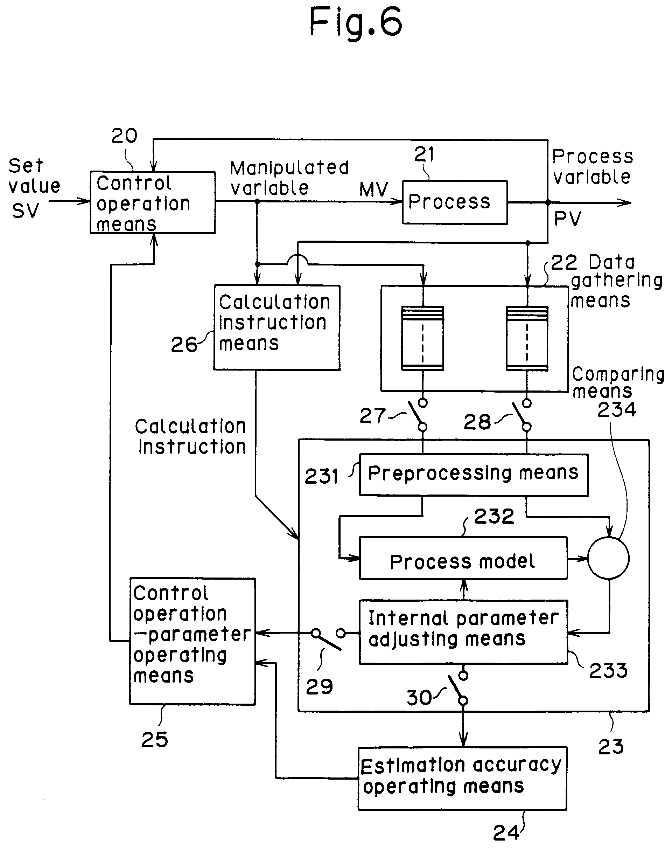

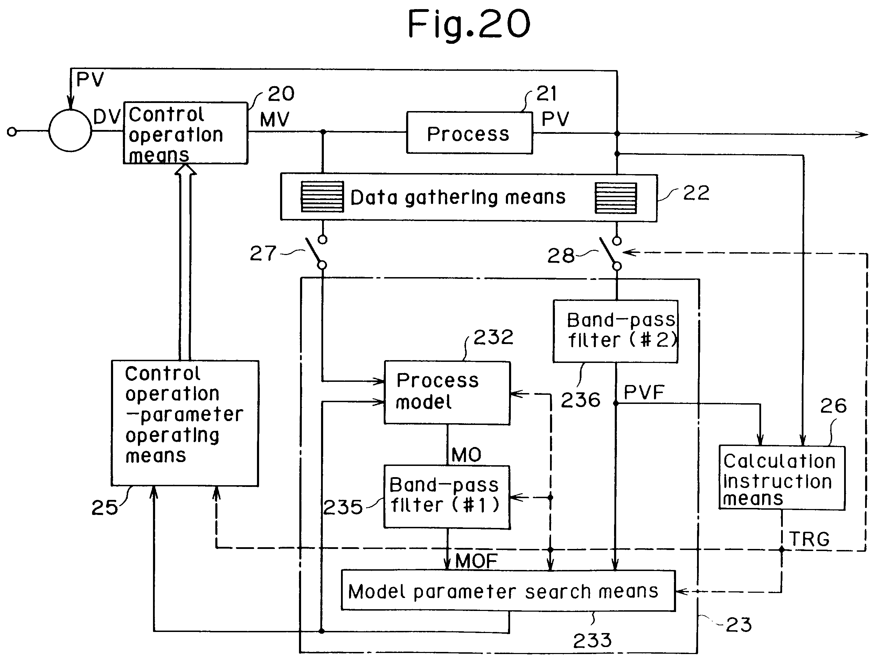

Fig. 6 is a structural block diagram which shows one embodiment of the process control device in accordance with the invention. In Fig. 6, 20 is control operation means, to which set value SV as a desired value and process variable PV which is the output of process 21 are inputted. In control operation means 20, such operation, as proportional operation, integral operation, or differential operation is applied to the difference between set value SV and process variable PV so as to obtain manipulated variable MV.

Manipulated variable MV which is the output of control operation means 20, is applied to process 21 to be controlled, and from process 21, process variable PV is outputted.

22 is data gathering means, wherein manipulated variable MV and process variable PV are inputted and these data are held as time series data for a predetermined period.

23 is modeling means in which preprocessing means 231, process model 232, internal parameter adjusting means 233 and comparing means 234 are provided. Preprocessing such as filtering is applied, at preprocessing means 231, to the outputs of data gathering means 22. Then, manipulated variable MV is inputted to process model 232 and process variable PV is inputted to comparing means 234. Process, model 232 simulates process 21. The output of process model 232 is inputted to comparing means 234, and compared with process variable PV separately applied. This comparison result is inputted to internal parameter adjusting means 233 which functions to adjust the internal parameter in process model 232 so that the output of process model 232 may match the output of process 21.

24 is estimation accuracy operating means, wherein the output of modeling means 23 is inputted so as to calculate accuracy of process model 232. 25 is control operation-parameter operating means, wherein the outputs of internal parameter adjusting means 232 and estimation accuracy operating means 24 are inputted and the control parameters calculated based upon the output thereof are set in control operation means 20. Control operation means 20 calculates manipulated variable MV based upon this new control parameter.

26 is calculation instruction means, wherein process variable PV and manipulated variable MV are inputted and the output is generated to manipulate switches 27 - 30 when the changes of the inputs exceed a predetermined value. Based upon this, a calculation instruction signal is applied to modeling means 23 so as to cause modeling means 23 to start its operation.

The function of this embodiment is explained in the following.

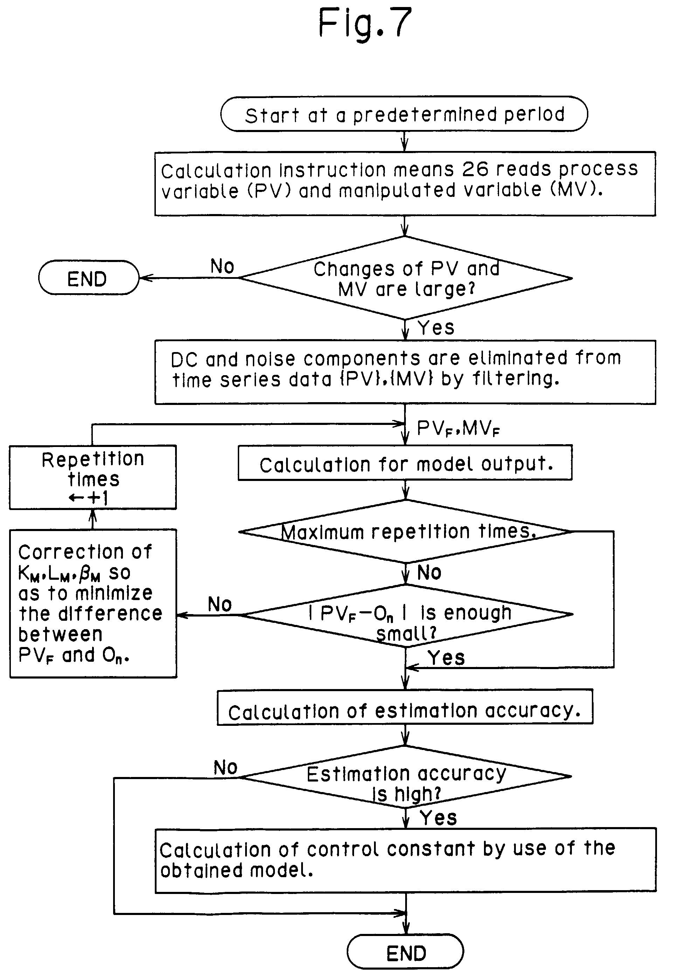

Fig. 7 is a flowchart which shows one example of the function of this embodiment. Data gathering, means 22 gathers manipulated variable MV and process variable PV as time series data at a predetermined period without any relation to this modeling operation. In Fig. 7, calculation instruction means 26 reads process variable (PV) and manipulated variable (MV) every predetermined period and functions to judge whether those changes are larger than the predetermined value. If the change is less than the predetermined value, the operation ends without giving any calculation instruction.

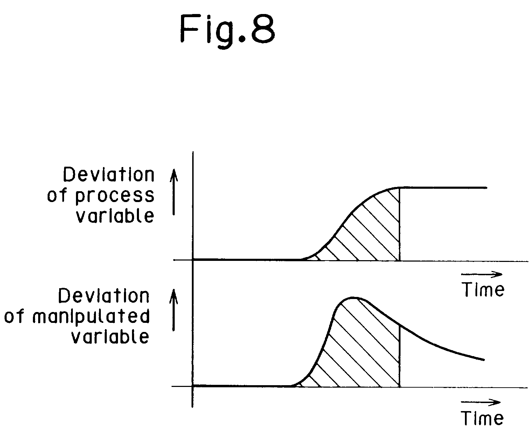

For example, this judgment is derived from such calculation, as shown in Fig. 8, that the area (slash part) is calculated by integrating the deviation of the process variable and the manipulated variable from respective steady states.

When the change is large, modeling means 23 reads time series data {PV} concerning process variable PV and time series data {MV} concerning manipulated variable MV gathered by data gathering means 22. Preprocessing means 231 serves to eliminate the DC component and noise component thereof by filtering.

This filtering is given by following equation (1), where $PV_F$: the time series data of the process variable, $PV_O$: the DC or noise components, and $\alpha$: filtering constant.

$$PV_F = (1 - \alpha) * PV_F + \alpha * (PV - PV_O) \tag{1}$$

Filtered time series data $PV_F$, $MV_F$ concerning the process variable and the manipulated variable respectively are applied to process model 232 in which calculation of model output is carried out.

Though this calculation is different by the process model, assumed that the n time model output is $O_n$, the above calculation is given by following equation (2), where $K_M$: gain of process model, $L_M$: dead time of process model, $\beta M$: first order lag coefficient of process model, $MV_F(n - L_M)$: this is done by calculation by the use of a value $MV_F$ before time $L_M$.

$$O_n = \beta_M * O_{n-1} + (1 - \beta_M) * K_M * MV_F(n - L_M) \tag{2}$$

This calculation is repeated until the repetition number reaches the maximum value, or until output $O_n$ of the process model becomes sufficiently close to time series data $PV_F$ concerning the process variable.

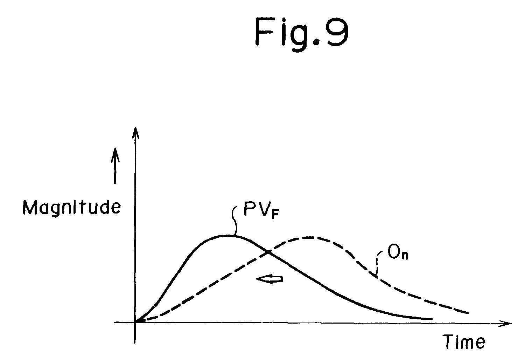

When the repetition number does not reach the maximum value, or when the difference between output $O_n$ of process model 232 and time series data $PV_F$ concerning the process variable is not small as shown in Fig. 9, gain $K_M$, dead time $L_M$, and first order lag coefficient $\beta M$ are adjusted so that this difference becomes small (that is, to cause the curve of output $O_n$ to move to the direction of an arrow), and then process model 232 is re-started.

When the repetition reaches the maximum number, or when the difference between output $O_n$ of process model 232 and time series data $PV_F$ concerning process variable becomes enough small, accuracy K of process model 232 is calculated by estimation accuracy operating means 24. This accuracy K is calculated, for example, by following equation (3) or (4).

$$K=1 - [\Sigma\{PV_F(i) - O(i)\}^2 / \Sigma PV_F(i)^2] \tag{3}$$

$$K=\Sigma\{PV_F(i)\}^2 / \Sigma\{O(i)\}^2 \tag{4}$$

where $PV_F(i)$: time series data of the process variable at time i, O(i): output of process model 232 at time i.

When this estimation accuracy is higher than a predetermined value, control operation-parameter operating means 25 calculates proportion/integration/differentiation constants, that is, control operation parameters, by using Ziegler-Nichols method, based upon obtained process model 232 of the first order lag process model.

Control operation means 20 calculates manipulated variable MV by using this control operation parameter newly obtained.

By the way, the process model is not necessarily such a first order system as shown by equation (2). Further, when there exists such measurable disturbance as load fluctuation in process 21, this disturbance can be used for the model calculation.

In the embodiment shown in Fig. 6, calculation must be done repeatedly with respect to the whole internal parameters of process model 232, that is, gain $K_M$, dead time $L_M$, first order lag coefficient $\beta_M$, by changing slightly these values, and therefore, it takes a lot of times for calculation. The following embodiment can overcome this problem. In this embodiment, gain $K_M$ is calculated based upon the integration ratio of the process variable and the output of the process model when the process gain is made 1, and dead time $L_M$ and first order lag coefficient $\beta_M$ are obtained by the repetition search method.

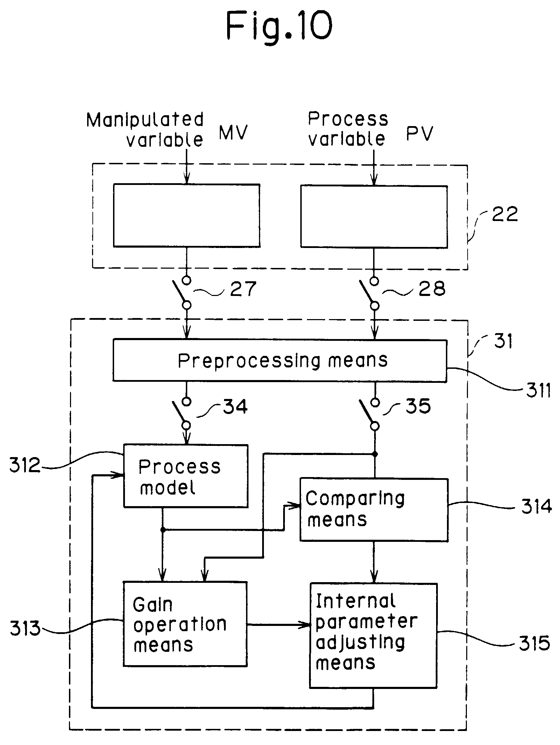

Fig. 10 shows the structure of this embodiment. In this figure, other portions than the modeling means and data gathering means 22 are omitted since these portions are the same as shown in Fig. 6.

In Fig. 10, 31 is modeling means which has similar function to modeling means 23 in Fig. 6. 311 is preprocessing means which has similar function to preprocessing means 231 in Fig. 6. Namely, process variable PV and manipulated variable MV stored in data gathering means 22 are filtered so as to eliminate the DC component and the noise component.

312 is process model which simulates the real process like process model 232. To this process model, the manipulated variable preprocessed by preprocessing means 311 is inputted. 313 is gain operation means, wherein the output of process model 312 and the process variable are inputted and the gain of process model 312 is calculated.

314 is comparing means for comparing the output of process model 312 and the process variable. 315 is internal adjusting means, wherein the output of comparing means 314 and the output of gain operation means 313 are inputted and the internal parameters are changed so that the difference between the output of process model 312 and the process variable may be enough small.

The output of internal parameter adjusting means 315 is applied both to estimation accuracy operating means 24 and control operation-parameter operating means 25 in Fig. 6 so as to obtain the control operation parameters of control operation means 20. Switches 27, 28, 34 and 35 are controlled by calculation instruction means 26. Function of this embodiment is explained in the following.

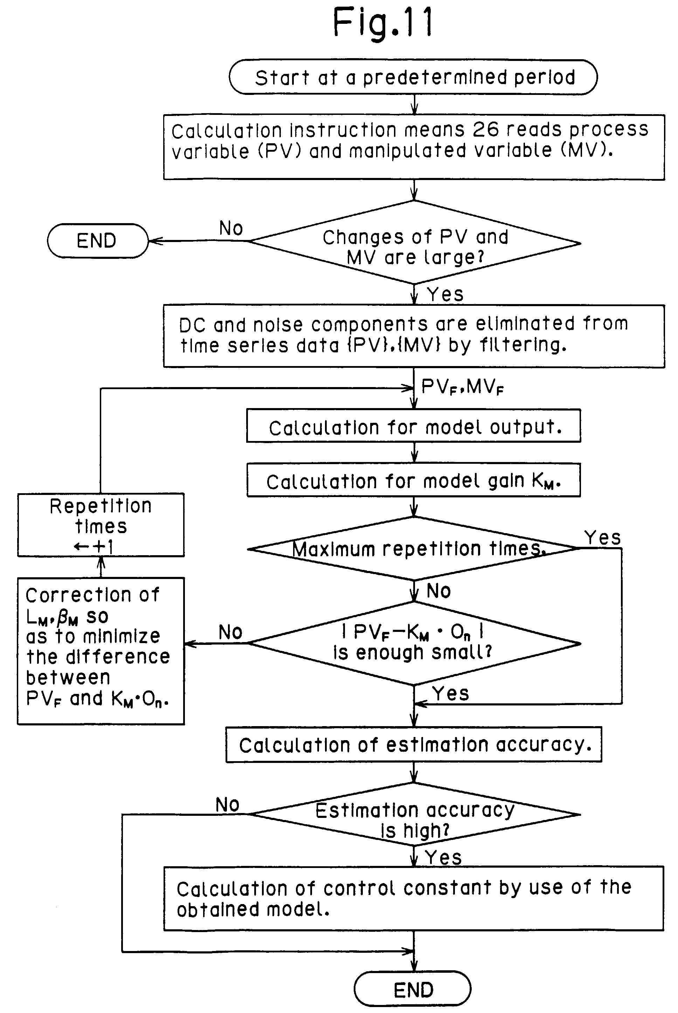

Fig. 11 is a flowchart which shoMs the function of this embodiment. Calculation instruction means 26 shown in Fig. 6 reads periodically manipulated variable brv and process variable PV, and only when those fluctuations become large, the following steps are executed.

That is, at preprocessing means 311, time series data {PV} and {MV} concerning the manipulated variable and the process variable respectively are filtered so as to eliminate the DC component and the noise component, and then the output of the process model is calculated by process model 312.

In this calculation, process model gain $K_M$ is made 1, and the calculation is carried out by following equation (5).

$$O_n = \beta_M * O_{n-1} + (1 - \beta_M) * MV_F(n - L_M) \tag{5}$$

where respective coefficients have the same meaning as in equation (2).

Next, at gain operation means 313, process model gain $K_M$ is calculated by use of following equation (6).

$$K_M = [\Sigma\{O(n)*PV_F(n)\}]/\{\Sigma O(n)^2\} \tag{6}$$

where O(n): the value obtained by the above equation (5), that is, the output of process model 312 when process model gain $K_M$ is made 1.

These calculations are carried out repeatedly until the repetition number reaches the maximum numbers, or until the product of output $O_n$ of process model 312 and process model gain $K_M$ calculated by gain operation means 313 becomes sufficiently close to time series data $PV_F$ of the process variable.

When all conditions in the above are not satisfied, dead time $L_M$ of process model 312 and first order lag coefficient $\beta_M$ are adjusted so as to minimize the above difference. Then, process model 312 is restarted, and such operations are carried out, that the output is calculated in accordance with equation (5) and that process model gain $K_M$ is calculated in accordance with equation (6).

When the whole conditions are satisfied, accuracy K of process model 312 is calculated. When this estimation accuracy is less than a predetermined value, control operation-parameter operating means 25 calculates proportion/ integration/ differentiation constant, that is, control operation parameters, by using Ziegler-Nichols method, based upon obtained process model 312 of the first order lag process model.

Control operation means 20 calculates the manipulated variable by using this control operation parameter newly obtained. Further, internal parameter adjusting means 315 calculates dead time $L_M$ and first order lag coefficient $\beta_M$ by the repetition search method which uses simplex method.

Further, if process model gain $K_M$ becomes necessary at the beginning of repetition, the last time process gain $K_M$ is used for this. In this embodiment, process model gain $K_M$ is automatically determined when dead $L_M$ time and first order lag coefficient $\beta_M$ are determined, and thus, the numbers of repetition search can be reduced.

For example, simplex method can be used for a method in case when internal parameter adjusting means 315 searches the internal parameter of process model 312. By the simplex method, some points having geometrical arrangement on $R^n$ are chosen, and search is carried out by comparing the values of the object function at these points. This method is disclosed on p.284 - 287, "Non-linear Programming" by Hiroshi Imano and Hiroshi Yamashita, published from "Nippon Kagaku Gijustu Rengou".

However, the I/O data of the usual simplex method are discrete values in principle. Therefore, such problem occurs, that since the object function enters into the space of the discrete values, search becomes impossible. Further, there is such restriction that parameters such as time constant and dead time must be positive numbers.

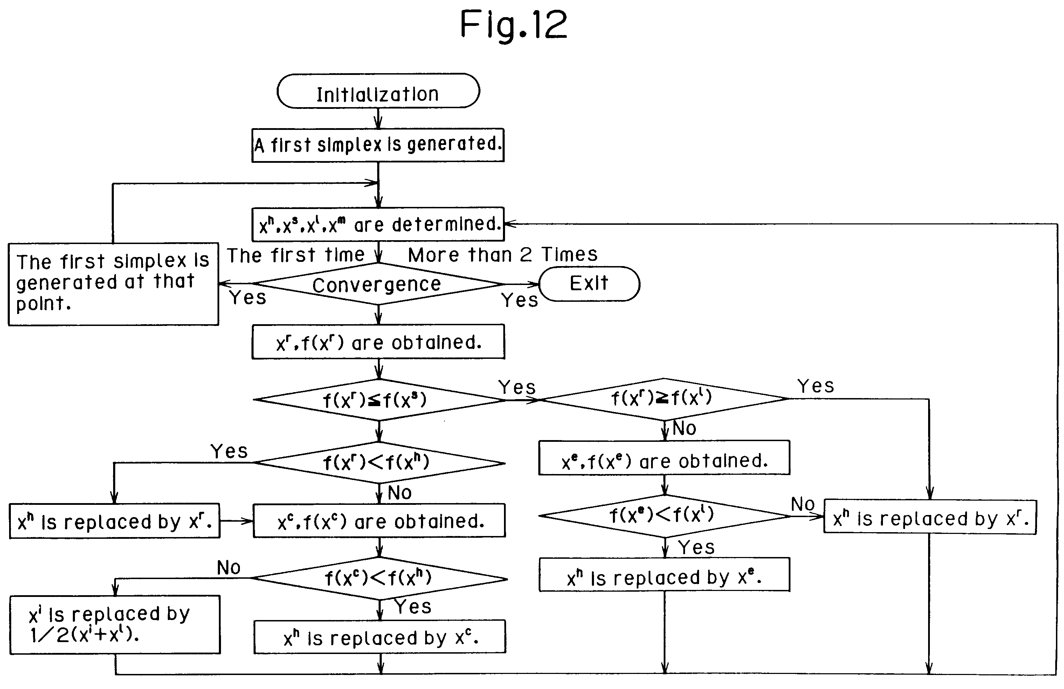

Fig. 12 shows procedure of the simplex method, in which the above mentioned restrictions are eliminated. In this figure, assumed that the process data gathered by data gathering means 22 corresponds to geometrical points x on $R^n$, and that the object function corresponds to function f( ) of at this geometrical point. The search is carried out by comparing the values of the object function f( ). Further, assumed that among points x, a point where object function f( ) takes the maximum value, is $x^h$, that among points x, a point where object function f( ) takes the second magnitude value, is $x^s$, that among points x, a point where object function f( ) takes the minimum value, is $x^1$, and that a centroid of the graphic pattern which has points x as summits, is $x^m$. Further, the following points are defined as follows:

Reflection plane: $\quad x^r = (1 + \alpha) * x^m - \alpha\, x^h$
$$\alpha > 0$$
Expansion: $\quad X^e = \gamma * x^r + (1 - \gamma) * x^m$
$$\gamma > 1$$
Contraction: $\quad x^c = \beta * x^h + (1 - \beta) * x^m$
$$\beta \in (0.1)$$
Reduction: $\quad$ The whole summits are reduced to the direction of $x^1$.

In Fig. 12, after initialization, (n + 1) affine independent convex hulls on $R^n$ are generated by a first simplex. Next, the above $x^h$, $x^s$, $x^l$ and $x^m$ are decided, and judgment as to whether it can be converged is carried out. This judgment is conducted in a way whether the following equation can be satisfied.

$$\Sigma(f(x^i) - f^m)^2/(n + 1) \leqq \varepsilon$$

where $f^m = \Sigma f(x^i)/(n + 1)$.

When the convergence condition is satisfied and if the convergence is the first time, simplex is generated at this point, and the operation repeats from the step that $x^h$, $x^s$, $x^l$, $x^m$ were decided in the above. The operation ends when the convergence is accomplished more than two times.

When it is not converged, $x^r$ and $f(x^r)$ are calculated, and judgment is carried out whether the foilowing equation is satisfied.

$$f(x^r) \leqq f(x^s)$$

When this condition is not satisfied, judgment is carried out as to whether the following equation is satisfied.

$$f(x^r) < f(x^h)$$

When the above equation is satisfied, $x^h$ is replaced by $x^r$. When the above equation is not satisfied, $x^c$ and $f(x^c)$ are obtained, by leaving the equation as it is, and judgment is carried out whether the following equation is satisfied.

$$f(x^c) < f(x^h)$$

When the above equation is satisfied, $x^h$ is replaced by $x^c$. When the above equation is not satisfied, $x^l$ is replaced by $(x^i + X^l)/2$, and the operation returns to the step that $x^h$, $x^s$, $x^l$ and $x^m$ were decided.

On the other hand, when the equation $f(x^r) \leqq f(x^s)$ is satisfied, judgment as to whether the following equation is satisfied, is conducted.

$$f(x^r) \geqq f(x^l)$$

When the above equation is not satisfied, $x^e$ and $f(x^e)$ are obtained, and judgment as to whether the following equation is satisfied, is carried out.

$$f(x^e) < f(x^l)$$

When the above equation is satisfied, $x^h$ is replaced by $x^e$. When the above equation is not satisfied and when $f(x^r) \geqq f(x^l)$ is satisfied, $x^h$ is replaced by $x^r$, and the operation returns to the step that $x^h$, $x^s$, $x^l$ and $x^m$ were decided.

In contrast to the usual simplex method, in this embodiment, when the convergence is the first time, simplex is generated at this point, and the simplex method is carried out once again. Therefore, such a disadvantage that the object function enters into the subspace can be avoided, and negative number can be used for such parameters.

By the way, in this embodiment, although the length of each component side which composes an initial polygon is made longer than sampling period and although the initial polygon is remade at least once, it is also possible that either of these two conditions is satisfied.

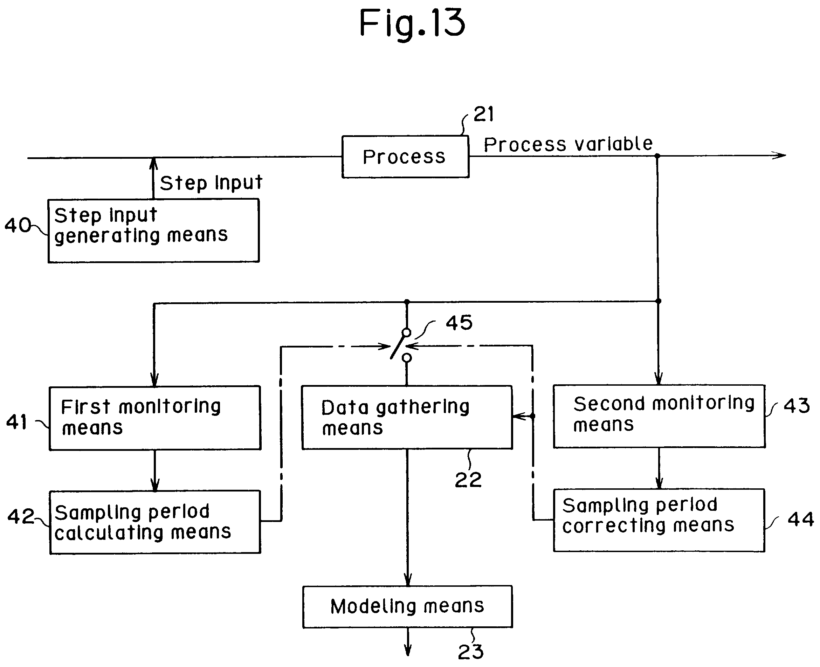

Fig. 13 shows a still other embodiment. In the embodiment in Fig. 6, initial values for proportional constant, integral constant and differential constant, and sampling period must be set prior to the control operation. If these values are not set properly, automatic adjustment of the control operation parameters can not be done properly, and as the result, the control characteristic becomes worse. In the embodiment shown in Fig. 13, in order to eliminate these situations, both the control operation parameters and the sampling period are previously tuned. In this embodiment, the same reference numerals are attached to the same components as in Fig. 6 and the explanation for these components is omitted.

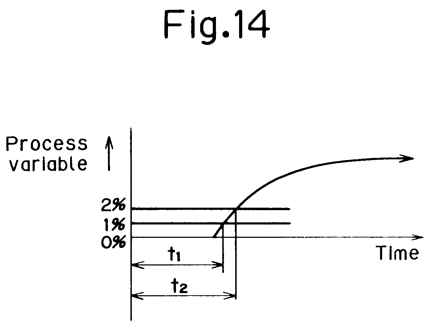

In Fig. 13, 40 is step input generating means which applies step like manipulated variable to process 21. By this input of the manipulated variable, the process increases gradually as shown in Fig. 14. 41 is first monitoring means which monitors the process variable of process 21. Namely, after application of the step like manipulated variable from step input generating means 40, time width $t_1$ (first time width) until the process variable reaches a first predetermined value, for example, 1% of full scale, is measured.

42 is sampling period calculating means, wherein the first time width measured by the first monitoring means 41 is inputted and based upon this, sampling period of data gathering means 22 is calculated. 43 is a second monitoring means which monitors the process variable from process 21. Namely, after application of the step like manipulated variable from step input generating means 40, time width $t_2$ (second time width) until the process variable reaches a second predetermined value larger than the first predetermined value, for example, 2% of full scale, is measured.

44 is sampling period correcting means, wherein the second time width measured by the second monitoring means 43 is inputted and the sampling period calculated by sampling period calculating means 42 is corrected.

45 is a switch which composes a sampler. In the first place, this switch is made ON every period calculated by sampling period calculating means 42, and later, is made ON every period corrected by sampling period correcting means 44. And, in accordance with these sampling periods, the process data is introduced into data gathering means 22. The gathered data is inputted to modeling means 23, and its internal parameters are adjusted, as explained in the embodiment of Fig. 6, until the output of process model 232 may coincide with the process variable. Based upon this internal parameters, control constant are calculated.

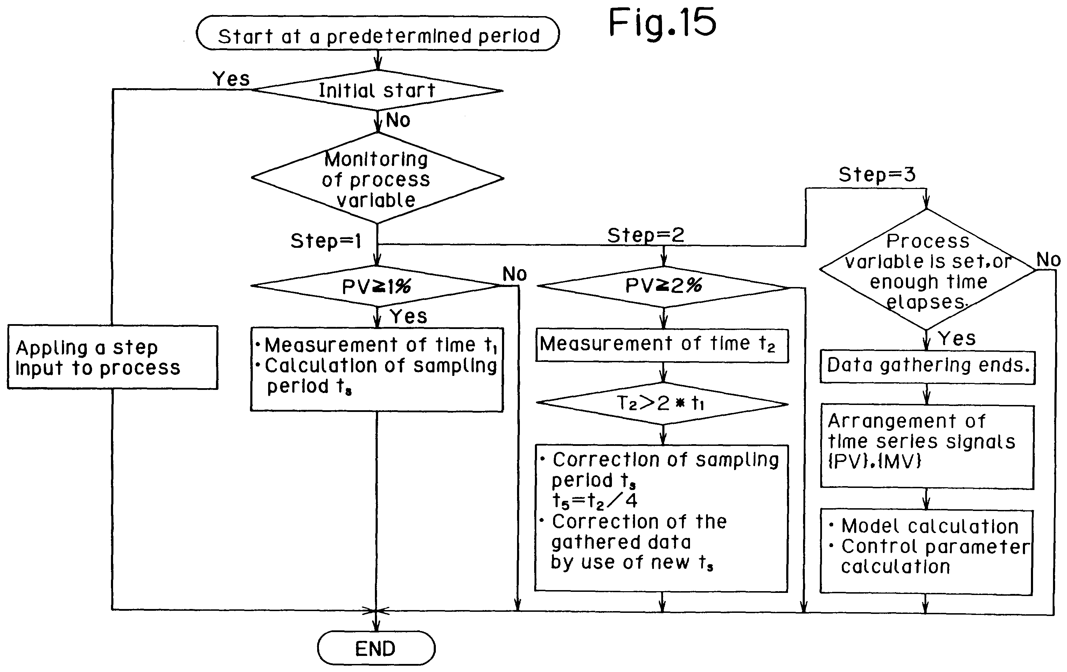

Next, the function of this embodiment is explained in accordance with a flowchart shown in Fig. 15. The operation is executed at a predetermined period at the initial stage of control. In the first place, the condition of start is judged whether it is initial state or not. When it is judged as an initial start, a step like manipulated variable is applied to process 21.

On the other hand, when the start is not an initial one, judgment as to whether the process corresponds to either of the following three steps, is judged. If the process does not correspond to any of these steps, the operation ends without doing anything.

(1) When process variable PV exceeds 1 % of full scale.
(2) When process variable PV exceeds 2 % of full scale.
(3) When process variable PV is settled to a fixed value or it becomes integer times of the sampling period obtained by sampling period correcting means 44.

When the process variable corresponds to the above step (1), elapsed time $t_1$ after application of the step like manipulated variable to the process, that is, the first time width is measured, and one to integer number of this time $t_1$ is used as sampling time ts. For example, sampling time ts is made as follows:

$$t_s = t_1/4$$

When the process variable corresponds to the above step (2), elapsed time $t_2$ after application of the step like manipulated variable to the process, that is, the second time width is measured, and judged as to whether this time width $t_2$ is larger than the twice of time width $t_1$ obtained by step (1). When time width $t_2$ is larger than the twice of $t_1$, sampling time is made as follows:

$$t_s = t_2/4$$

In this case, interpolation is applied to previously gathered data so as to use these data as the data for new sampling period $t_s$.

When the process variable corresponds to the above step (3), data gathering operation of the process variable terminates, and arrangement of time series data {PV} and {MV} with respect to the process variable and the manipulated variable, stored in data gathering means 22, is carried out. Based upon these time series data, the internal parameters of process model is adjusted by modeling means 23, and control constants are obtained.

The obtained control constants are used as an initial value. Then, data gathering is carried out by sampling period $t_s$, and the control parameters are calculated in accordance with the procedure explained in Fig. 7.

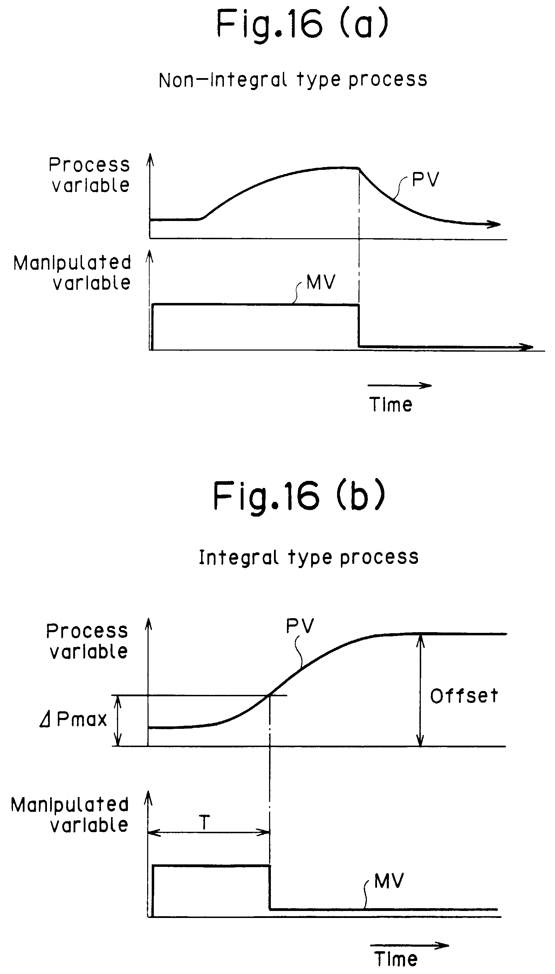

In this embodiment, the step like manipulated variable is applied once at the beginning of control. In case of the non-integral type process, process variable PV can settle by one time application of the step like manipulated variable as shown in Fig. 16(a).

However, in case of the integral type process, offset remains as shown in Fig. 16(b). Accordingly, in this case, after the process variable is settled, a step like signal is applied to opposite direction so as to eliminate the above offset, and then, sampling of the process data goes on. If change of the process variable exceeds a fixed tolerance, the step like signal is applied to opposite direction even though the process variable has not been settled yet, so that the process variable may not become too much large. Further, it is possible to judge the process whether it is integral type or not from the amount of the offset.

Applied period T of the step like manipulated variable is set to a fixed time or a time until the process variable reaches $\Delta P^{max}$.

Further, though in the above embodiments, the control constants are derived from the internal parameters of the modeling means by use of Ziegler-Nichols method, least square method or maximum likelihood degree method can be used.

In the above mentioned embodiments, process data is gathered by the data gathering means and the modeling means is started so as to correct the internal parameters of the process model only when the change occurs in the process data. Then, estimation accuracy of the process model is calculated, and the control constants are calculated. Therefore, in this embodiments, identification signals are unnecessary, and thus, these embodiments have such advantage that extra disturbances are not applied to the process.

Further, since calculation for the estimation accuracy of the process model is carried out, if the model is judged to be inadequate, the adjustment of the control constant is stopped or reduced, and therefore, such uncontrollable state in the process control device such as shutdown, overshooting, etc. can be avoided.

Further, since calculation of the process model is carried out while the data gathering means is gathering the process data, the time for data gathering is unnecessary.

Further, since the process gain is calculated from the process variable and the output of the process model, the search time can be shortened.

Further, such a disadvantage that the object function enters into the subspace can be avoided since simplex method is used as the search method and since simplex is regenerated when the convergence is the first time.

Further, since at the beginning of control, a step like manipulated variable is applied to the process and since initial values of the sampling period and the control constant are derived from the change of the process variable at that time, optimum control can be accomplished.

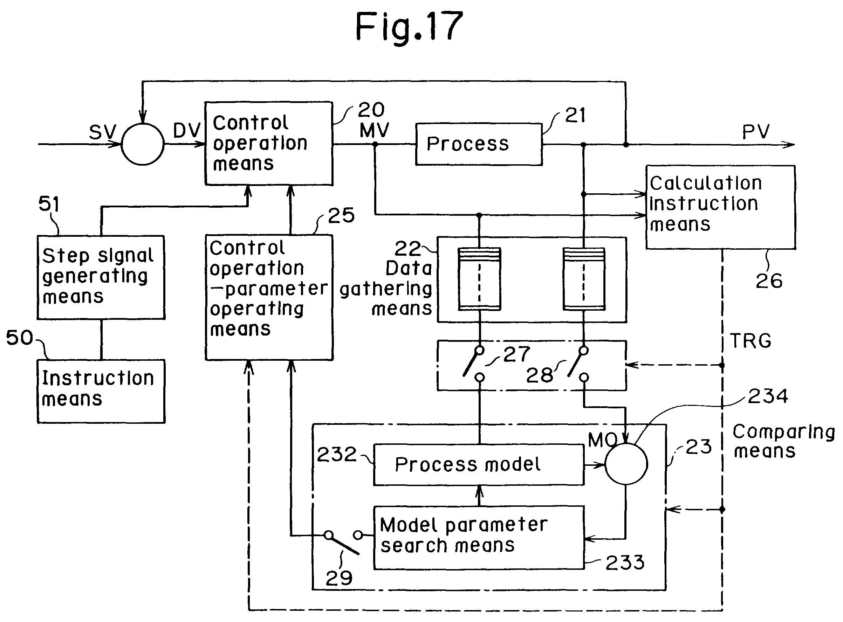

Fig. 17 shows a structural block diagram of a still other embodiment in accordance with this invention. In this embodiment, estimation accuracy operating means 24 shown in Fig. 6 is omitted. In place of this, manual instruction means 50 and step signal generating means 51 are provided, wherein step signal generating means 51 generates a step like pulse signal to process 21 based upon the instruction applied from instruction means 50.

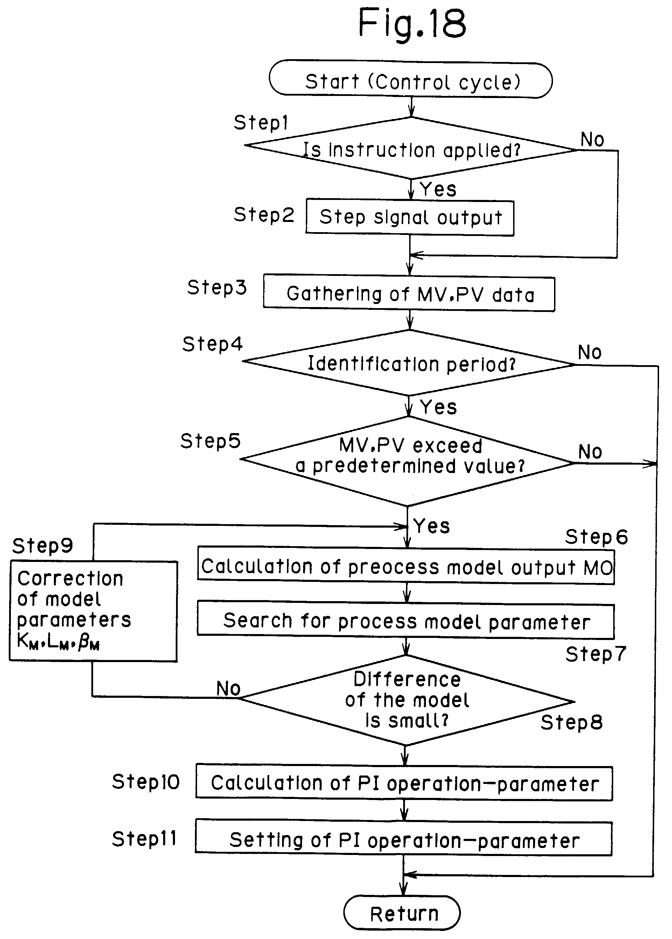

Fig. 18 is a flowchart which shows tuning operation for calculating the control operation parameters, started at a predetermined period in the embodiment in Fig. 17.

In the first place, judgment as to whether instruction for generating the step signal (the instruction from instruction means 50) exists, is conducted (step 1). When this instruction exists, a step signal having a fixed width is generated from step signal generating means 51 and is applied to manipulated variable MV in control operation means 20 (step 2). When the instruction does not exist, step 2 is skipped.

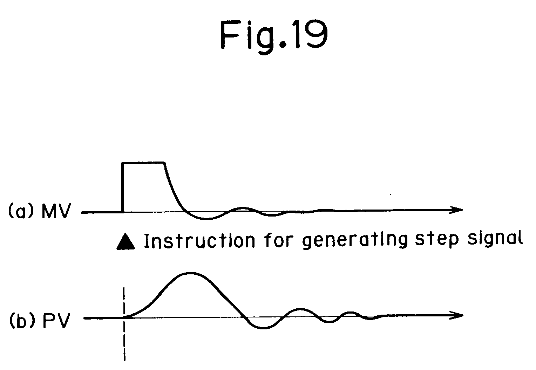

Fig. 19 is a waveform diagram of manipulated variable MV and process variable PV, wherein the change of the process variable PV is shown when the step like signal is applied to manipulated variable MV.

When the manipulated variable changing step-like as shown in (a) is applied to process variable PV, process variable PV responds in such a manner as shown in (b) in accordance with its dynamic characteristic.

Data gathering means 22 receives manipuiated variable MV and process variable PV, and holds these data as time series data for a predetermined period (step 3).

Calculation instruction means 26 reads manipulated variable MV and process variable PV, and monitors, at every identification period, whether the fluctuation of these signals exceeds a predetermined value (step 5). When the fluctuation of these signals is less than the predetermined value, it is judged that the control is satisfactory state, and the operation terminates without generating a trigger signal. As shown in Fig. 8, the above judgment is done based upon the size of areas (slash parts) calculated by integrating the deviation of process variable PV from its steady state and the deviation of manipulated variable MV from its steady state for a fixed time.

At step 2, when the step signal is applied and when both manipulated variable MV and process variable PV become large, calculation instruction TRG is generated. Modeling means 23, when it receives calculation instruction TRG, functions to estimate the dynamic characteristic of process 21 by using the change of manipulated variable MV and the response waveform of process variable PV from process 21, based upon the data applied, for a predetermined time, from data gathering means (steps 6 to 9).

At step 8, when the difference of the model becomes small, that is, when output MO of process model 232 coincides with process variable PV, control operation means 20 calculates, based upon the obtained parameters of process model 232, proportion(PB)/ integration(TI)/ differentiation(TD) parameters in accordance with following equation (7), for example, by use of Ziegler-Nichols method, and the obtained operation parameters are set in control operation means 25 (steps 10 and 11).

$$(PB/K_M) = a(L_M/\beta_M)^2 + b(L_M/\beta_M) + c$$

$$(TI/\beta_M) = d(L_M/\beta_M)^2 + e(L_M/\beta_M) + f$$

$$TD = 0.2*TI \tag{7}$$

Control operation means 20 calculates manipulated signal MV by using newly set operation parameters.

Step signal generating means 51 applies a pulse signal in place of the step signal when the process is integral type process.

In this embodiment, PI operation parameter can be set to an optimum value arbitrarily, if necessary, by applying a step like signal to the manipulated variable in automatic control state, in accordance with the instruction signal. And therefore, operability of this embodiment can be improved sufficiently.

Further, since the calculation to obtain the process model output at modeling means 23 or the calculation to search the parameters is conducted in accordance with the calculation instruction signal applied from the calculation instruction means, the amount of calculation can be reduced as the whole.

Fig. 20 is a structural block diagram which shows a still other embodiment in accordance with the invention. By this embodiment, drawbacks of the prior art shown in Fig. 5 are overcome. In the conventional technique shown Fig. 5, the signal to process model 13 is applied from control operation means 2 through high pass filter 12. By this structure, DC and noise components can be eliminated from the signal and it has such feature that calculation in the process model becomes comparatively simple. However, this prior art has following drawbacks.

(a) The signal applied to the process model is preferably the same as a signal to be applied to real process. However, since the signal passes through the high pass filter, the signal level of this signal becomes small or the waveform of the signal is changed, and thus, calculating accuracy in the process model is degraded.

(b) Toward difference operation means 15, the signal from control operation means 2, in the real process side, flows in such order as real process 4 to high pass filter 14 to difference operation means 15, and in the process model side, flows in such order as high pass filter 12 to process model 13 to difference operation means 15. That is, in the process model side, the order of high pass filter 12 is different from the real process side.

Thus, it is necessary that process model 13 is a linear characteristic type so that model parameter search means 16 may search accurately the parameters which reduce the difference signal applied from difference operation means 15. Therefore, it is impossible to set high-low-limit in the output and also to use a nonlinear characteristic type model for the process model.

The embodiment shown in Fig. 20 overcomes these problems, wherein the amount of calculation in the process model or in searching the parameters can be reduced, the calculation in the process model can be done accurately corresponding to the real process, and non-linear characteristic type model can be used for the process model.

Signal MV from control operation means 20 is applied to process model 232 through data gathering means 22. Signal MO from process model 232 is applied to a first band pass filter so as to eliminate the DC and noise components. Signal PV from process 21 is applied to a second band pass filter 236 having the same characteristic as that of first band pass filter 235, through data gathering means 22.

These first and second band pass filters 235, 236 conduct such filtering calculation as shown in the following equation (8).

$$PVF = (1 - \alpha)*PVF + a*(PV - PVo) \tag{8}$$

where PVF: applied time series data, PVo: DC and noise components, $\alpha$: filter constant. Calculation instruction means 26 receives signal PV from process 21 and signal PVF from second band pass filter 236, and when either of these signals changes, calculation instruction signal TRG is generated.

Model parameter search means 233 receives signal MOF from first band pass filter 235 and signal PVF from second band pass filter 236, and based upon calculation instruction signal TRG from calculation instruction means 26, searches parameters that make the difference of the signals applied from the first and second, band pass filters minimum. And the parameters of process model 232 is varied based upon searched parameters.

Control operation-parameter operating means 25 calculates operation-parameters of control operation means 20 and sets these values in control operation means 20.

Calculation instruction signal TRG from calculation instruction means 26 is applied, in addition to model parameter search means 23, to process model 232, first band pass filter 235 and control operation parameter operating means 25 simultaneously, which start calculation based upon the calculation instruction signal. In the following, the function of this embodiment is explained.

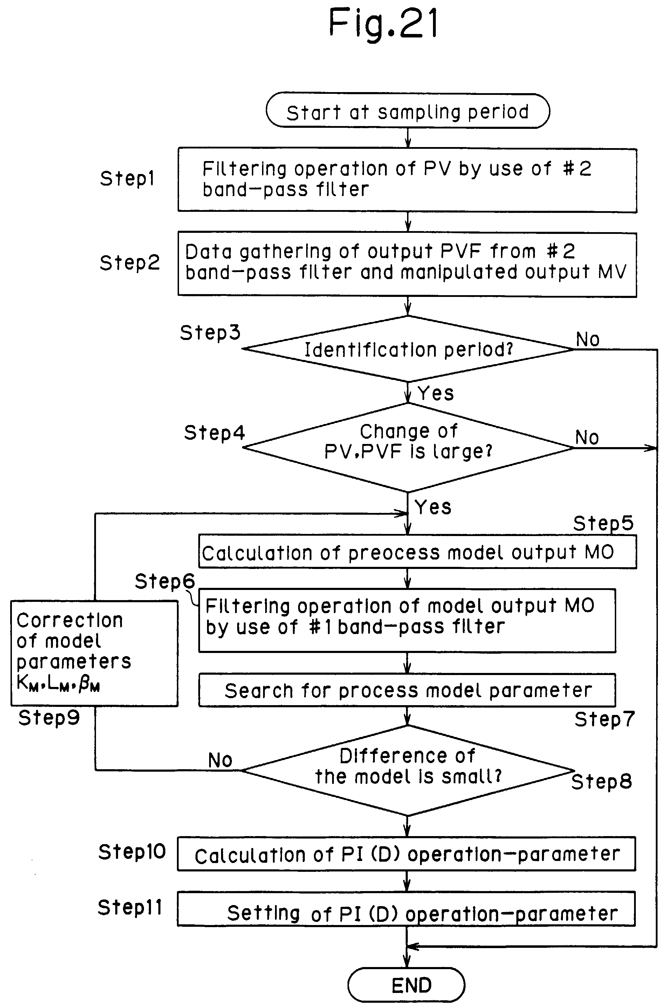

Fig. 21 is a flowchart which shows tuning action for control operation parameter, started at a predetermined period. Second band pass filter 236 receives process variable PV from process 21, and conducts such filtering calculation as shown by equation (8) (step 1).

Calculation instruction means 26 reads the time series data concerning process variable PV and output time series data PVF of second band pass filter 236, and monitors, at every identification period, whether the change of these data is larger than a predetermined value (step 4).

When the change of these data is less than the fixed value, it is judged that the control is in good condition, and the operation ends without generating the calculation instruction signal.

When the change of PV or PVF exceeds the fixed value, calculation instruction means 26 generates calculation instruction signal TRG. Process model 232 which receives this calculation instruction signal TRG, reads the time series data of manipulated variable MV gathered at step 2 (the same signal as the manipulated variable applied to process 21), and calculates model output MO in accordance with equation (5) (step 5).

Output MO of process model 232 is applied to first band pass filter 235 in which filtering calculation is carried out in accordance with equation (8) (step 6). By the filtering operation, the DC and noise components included in model output MO are eliminated.

Model parameter search means 233 receives time series data MOF from first band pass filter 235 and time series data PVF from second band pass filter 236, and conducts calculation for searching optimum parameters for process model 232.

By this calculation, for example, gain $K_M$ and evaluation function CRIT in the following equation (9) are obtained.

$$K_M = \Sigma\{MOF(n)*PVF(n)\}/\Sigma\{MOF(n)\}$$

$$CRIT = 1 - \Sigma\{MOF(n)*PVF(n)\}^2/\Sigma\{MOF(n)^2*\Sigma PVF(n)^2\} \tag{8}$$

Further, parameter search means 23 functions to search the best combination of time constant $T_M$ and dead time $L_M$ of the model, by which evaluation function CRIT is made minimum.

That is, gain $K_M$ of process model 232, dead time $L_M$, and first order lag coefficient $\beta_M$ are corrected respectively until the output of process model 232 becomes sufficiently close to the output of process 21 (i.e., the difference of process model becomes less than a fixed value), by repeating the operation from step 5 to step 9.

At step 8, if it is judged that the difference of the model is small, that is, if it is judged that output MOF from first band pass filter 235 is nearly equal to output PVF from second band pass filter 236, control operation-parameter operating means 25 calculates, based upon the obtained parameters of process model 232, proportion (PB)/ integration (TI)/ differentiation(TD) parameters in accordance with equation (7), for example, by use of Ziegler-Nichols method, and the obtained operation parameters are set in control operation means 20 (steps 10 and 11).

Control operation means 20 calculates manipulated variable MV by using newly set operation parameters.

Process model 232 is not necessarily first order lag type system. Further, when measurable disturbance such as load fluctuation exists in process 21, this disturbance can be used for the model calculation.

In order to obtain the process model, calculation is conducted in such manner that as to the whole internal parameters, i.e., gain $K_M$, dead time $L_M$, and first order lag coefficient $\beta_M$, the calculation is done repeatedly by changing slightly the value of each internal parameter.

For example, gain $K_M$ is determined by totalizing ratio of the process variable and the output of the process model when the gain of process model is made 1. Then, dead time $L_M$ and first order lag coefficient $\beta_M$ are determined by, using repetition search method.

This embodiment has following advantages in comparison with the conventional apparatus shown in Fig. 5.

(a) It is so configured that the same manipulated variable as one applied to real process 21 is applied to process model 232 simultaneously. Therefore, in the process model, accuracy of model output calculation can be improved.
(b) In the signal route from control operation means 20 to model parameter search means 233, the signal from control operation means 20 flows like the process (process model) to the high pass filter in both the real process side and the process model side. Therefore, it is possible to set high-low-limit in the output, and also possible to use a non-linear characteristic type model for the process model.
(c) Since the calculation to search the parameters is conducted in accordance with the calculation instruction signal applied from the calculation instruction means, the amount of calculation can be reduced as the whole.

## Claims

1. A self-adaptive controller using an internal process model, comprising

   - means for generating process variable (PV) and set value (SV);
   - control operation means (20) of calculating a manipulated variable (MV) which is to be applied to a process (21) based on said process variable (PV) and set value (SV);
   - data gathering means (22) for gathering a set of time series data from said manipulated variable (MV) and a set of time series data from said process variable (PV) for a predetermined period;
   - modeling means (23), including a process model (232) and internal parameter adjusting means (233), for correcting the internal parameters of said process model so that an output of said process model (232) in response to a set of time series data of said manipulated variable (MV) matches said set of time series data of said process variable (PV);
   - estimation accuracy operating means (24) for calculating the accuracy of said process model (232);
   - means for obtaining control operation parameters (25) of said control operation means,
   characterized by
   - means (26) for generating calculation instructions when changes of said process variable PV from the process and said manipulated variable MV from said control operating means exceed predetermined values,
   - means for starting calculation and correction of model parameters in response to calculation instructions generation means (26),
   - means for repeating said calculation and correction of the model parameters until a repetition number reaches a maximum value or until the output of the process model becomes sufficiently close to time series data PV concerning the process variable, and
   - means for calculating control parameters based on the obtained model when the estimation accuracy is higher than a predetermined value.

2. A self-adaptive controller according to claim 1,
   characterized in that it comprises:

   step input generating means which applies a step input to said process (21);
   first monitoring means which monitors first time width until said process variable (PV) changes to a first fixed level;
   sampling period calculating means, wherein sampling period is made some divided value of said first time width and said process variable (PV) is sampled by said data gathering means (22) at said sampling period;
   second monitoring means which monitors second time width until said process variable (PV) changes to a second fixed level higher than said first fixed level; and
   sampling period correcting means which corrects, based upon said first time width and said second time width, sampling period calculated by said sampling period calculating means.

**3.** A self-adaptive controller according to claim 1,
characterized by

step input generating means wherein, at an automatic control state, a step like signal having a fixed time width is applied to the output of said control operation means (20) according to instruction applied from outside.

**4.** A self-adaptive controller according to claim 1,
characterized by

first band pass filter to which a signal from said process model (232) is applied;

second band pass filter having the same characteristic as that of said first band pass filter, to which a signal from said process (21) is applied, and

calculation instruction means to which a signal from said process (21) and a signal from said second band pass filter are applied, wherein search for parameters by which the difference between signals from said first and second band pass filters are made minimum, is conducted in response to the calculation instruction of said calculation instruction means and the parameters of said process model are changed based upon the search result.

**Patentansprüche**

**1.** Selbstadaptiver Controller, der ein internes Prozeßmodell verwendet, mit

- einer Einrichtung zum Erzeugen einer Prozeßvariablen (PV) und eines Einstellwertes (SV),
- einer Steueroperationseinrichtung (20) zum Berechnen einer manipulierten Variablen (MV), die an einen Prozeß (21) aufgrund der Prozeßvariablen (PV) und des Einstellwertes (SV) zu legen ist,
- einer Datensammlungseinrichtung (22) zum Sammeln eines Satzes von Zeitfolgedaten von der manipulierten Variablen (MV) und eines Satzes von Zeitfolgedaten von der Prozeßvariablen (PV) für eine vorbestimmte Zeitdauer,
- einer Modelleinrichtung (23) einschließlich eines Prozeßmodelles (232) und einer internen Parametereinstelleinrichtung (233) zum Korrigieren der internen Parameter des Prozeßmodelles, so daß ein Ausgangssignal des Prozeßmodelles (232) abhängig von einem Satz von Zeitfolgedaten der manipulierten Variablen (MV) an den Satz der Zeitfolgedaten der Prozeßvariablen (PV) angepaßt ist,
- einer Schätzgenauigkeitsbetriebseinrichtung (24) zum Berechnen der Genauigkeit des Prozeßmodelles (232),
- einer Einrichtung zum Gewinnen von Steueroperationsparametern (25) der Steueroperationseinrichtung,

gekennzeichnet durch

- eine Einrichtung (26) zum Erzeugen von Berechnungsbefehlen, wenn Änderungen der Prozeßvariablen (PV) von dem Prozeß und der manipulierten Variablen (MV) von der Steuerbetriebseinrichtung vorbestimmte Werte überschreiten,
- eine Einrichtung zum Starten einer Berechnung und einer Korrektur der Modellparameter abhängig von der Berechnungsbefehlserzeugungseinrichtung (26),
- eine Einrichtung zum Wiederholen der Berechnung und Korrektur der Modellparameter, bis eine Wiederholungszahl einen Maximalwert erreicht oder bis das Ausgangssignal des Prozeßmodelles ausreichend nahe zu Zeitfolgedaten (PV) bezüglich der Prozeßvariablen wird, und
- eine Einrichtung zum Berechnen von Steuerparametern aufgrund des erhaltenen Modelles, wenn die Schätzgenauigkeit höher als ein vorbestimmter Wert ist.

**2.** Selbstadaptiver Controller nach Anspruch 1, dadurch gekennzeichnet, daß er umfaßt:

eine Stufeneingangserzeugungseinrichtung, die einen Stufeneingang an den Prozeß (21) legt,

eine erste Überwachungseinrichtung, die eine erste Zeitdauer überwacht, bis sich die Prozeßvariable (PV) auf einen ersten festen Pegel ändert,

eine Abtastperiodenberechnungseinrichtung, bei der eine Abtastperiode ein bestimmter geteilter Wert der ersten Zeitdauer ist und die Prozeßvariable (PV) durch die Datensammlungseinrichtung (22) bei der Abtastperiode abgetastet wird,

eine zweite Überwachungseinrichtung, die eine zweite Zeitdauer überwacht, bis sich die Prozeßvariable (PV) auf einen zweiten festen Pegel höher als den ersten festen Pegel ändert, und

eine Abtastperiodenkorrektureinrichtung, die aufgrund der ersten Zeitdauer und der zweiten Zeitdauer eine Abtastperiode korrigiert, die durch die Abtastperiodenrechnungseinrichtung berechnet ist.

3. Selbstadaptiver Controller nach Anspruch 1, gekennzeichnet durch

eine Stufeneingangserzeugungseinrichtung, bei der bei einem automatischen Steuerzustand ein stufenähnliches Signal mit einer festen Zeitdauer an dem Ausgang der Steueroperationseinrichtung (20) gemäß einem von außen angelegten Befehl liegt.

4. Selbstadaptiver Controller nach Anspruch 1, gekennzeichnet durch

ein erstes Bandpaßfilter, an dem ein Signal von dem Prozeßmodell (232) anliegt,
ein zweites Bandpaßfilter mit der gleichen Kennlinie wie diejenige des ersten Bandpaßfilters, an dem ein Signal von dem Prozeß (21) anliegt, und
eine Berechnungsbefehlseinrichtung, an der ein Signal von dem Prozeß (21) und ein Signal von dem zweiten Bandpaßfilter anliegen, wobei eine Suche nach Parametern, durch die die Differenz zwischen Signalen von den ersten und zweiten Bandpaßfiltern ein Minimum wird, abhängig von dem Berechnungsbefehl der Berechnungsbefehlseinrichtung durchgeführt wird und die Parameter des Prozeßmodelles aufgrund des Suchergebnisses verändert werden.

## Revendications

1. Contrôleur auto-adaptatif utilisant un modèle de processus interne, comprenant

- des moyens pour générer une variable de processus (PV) et une valeur fixée (SV);
- des moyens d'opération de commande (20) de calcul d'une variable manipulée (MV), qui est destinée à être appliquée à un processus (21) sur la base de ladite variable de processus (PV) et de ladite valeur fixée (SV);
- des moyens de rassemblement de données (22), pour rassembler un ensemble de données en série dans le temps de la dite variable manipulée (MV), et un ensemble de données en série dans le temps de ladite variable de processus (PV), pendant une durée prédéterminée;
- des moyens de modélisation (23), comportant un modèle de processus (232) et des moyens de réglage de paramètres internes, pour corriger les paramètres internes dudit modèle de processus, de façon qu'une sortie dudit modèle de processus (232), en réponse à un ensemble de données en série dans le temps de ladite variable manipulée (MV), corresponde audit ensemble de données en série dans le temps de ladite variable de processus (PV);
- des moyens opératoires de précision d'estimation (24), pour calculer la précision dudit modèle de processus (232);
- des moyens pour obtenir des paramètres d'opération de commande (25) desdits moyens d'opération de commande,

caractérisé par

- des moyens (26) pour générer des instructions de calcul, lorsque des variations de ladite variable de processus PV du processus et desdites variables manipulées MV desdits moyens d'opération de commande dépassent des valeurs prédéterminées,
- des moyens pour commencer le calcul et la correction des paramètres du modèle, en réponse aux moyens de génération d'instructions de calcul (26),
- des moyens pour répéter lesdits calcul et correction des paramètres du modèle, jusqu'à ce qu'un nombre de répétitions atteigne une valeur maximale, ou jusqu'à ce que la sortie du modèle de processus devienne suffisamment proche des données en série dans le temps PV concernant la variable de processus, et
- des moyens pour calculer les paramètres de commande sur la base du modèle obtenu, lorsque la précision d'estimation est supérieure à une valeur prédéterminée.

2. Contrôleur auto-adaptatif selon la revendication 1, caractérisé en ce qu'il comprend:

des moyens de génération d'entrée en échelon, qui appliquent une entrée en échelon audit processus (21);
des premiers moyens de surveillance, qui surveillent une première largeur de temps jusqu'à ce que ladite variable de processus (PV) passe à un premier niveau fixé;
des moyens de calcul de période d'échantillonnage, dans lesquels une période d'échantillonnage est faite d'une certaine valeur divisée de ladite première largeur de temps, et ladite variable de processus (PV) est échantillonnée par lesdits moyens de rassemblement de données (22) à ladite période d'échantillonnage;
des deuxièmes moyens de surveillance, qui surveillent une deuxième largeur de temps, jusqu'à ce que ladite variable de processus (Pv) passe à un deuxième niveau fixé, supérieur audit premier niveau fixé; et
des moyens de correction de période d'échantillonnage, qui corrigent, sur la base de ladite première largeur de temps et de ladite deuxième largeur de temps, la période d'échantillonnage calculée par lesdits moyens de calcul de période d'échantillonnage.

3. Contrôleur auto-adaptatif selon la revendication 1, caractérisé par
des moyens de génération d'entrée en échelon, dans lesquels, dans un état de commande automatique, un signal ressemblant à un échelon, ayant une largeur de temps fixe, est appliqué à la sortie desdits moyens d'opération de commande (20), selon l'instruction appliquée depuis l'extérieur.

4. Contrôleur auto-adaptatif selon la revendication 1, caractérisé par

un premier filtre passe bande, auquel un signal provenant dudit modèle de processus (232) est appliqué;
un deuxième filtre passe bande, ayant la même caractéristique que celle dudit premier filtre passe bande, auquel un signal provenant dudit processus (21) est appliqué, et
des moyens d'instruction de calcul, auxquels un signal provenant dudit processus (21) et un signal provenant dudit deuxième filtre passe bande sont appliqués, dans lesquels la recherche de paramètres par lesquels la différence entre les signaux provenant desdits premier et deuxième filtres passe bande est rendu minimale, est effectuée en réponse à l'instruction de calcul desdits moyens d'instruction de calcul, et les paramètres dudit modèle de processus sont basés sur le résultat de la recherche.

# Fig.1  (Prior Art)

EP 0 417 593 B1

# Fig.2 (Prior Art)

EP 0 417 593 B1

Set value SV $\xrightarrow{+}$ 3 $\rightarrow$ DV $\rightarrow$ **Control operation means** 2 $\xrightarrow{+}$ 7 $\rightarrow$ **Process** 4 $\rightarrow$ Process variable PV

**Limit cycle generator** 6

# Fig.3 (Prior Art)

Set value SV → (+/−) 3 → DV → Control operation means (2) → Process (4) → Process variable PV

Response waveform rule applying means 8

EP 0 417 593 B1

# Fig.4 (Prior Art)

Set value SV → + [3] − → Control operation means [2] → + [10] → Process [4] → Process variable PV

Control constant

Identification signal generator [9]

Dynamic characteristic identification means [11]

EP 0 417 593 B1

# Fig.5 (Prior Art)

EP 0 417 593 B1

# Fig.6

EP 0 417 593 B1

# Fig.7

```
        ┌─────────────────────────────────────┐
        │   Start at a predetermined period   │
        └─────────────────────────────────────┘
                          │
        ┌─────────────────────────────────────────┐
        │ Calculation instruction means 26 reads  │
        │ process variable (PV) and manipulated   │
        │ variable (MV).                          │
        └─────────────────────────────────────────┘
                          │
   ┌─────┐   No      ╱──────────────────╲
   │ END │◄──────────   Changes of PV and
   └─────┘           ╲  MV are large?   ╱
                          │ Yes
        ┌─────────────────────────────────────────┐
        │ DC and noise components are eliminated  │
        │ from time series data {PV},{MV} by      │
        │ filtering.                              │
        └─────────────────────────────────────────┘
```

$PV_F , MV_F$

Calculation for model output.

Maximum repetition times.

Repetition times ← +1

Correction of $K_M , L_M , \beta_M$ so as to minimize the difference between $PV_F$ and $O_n$.

$| PV_F - O_n |$ is enough small?

Calculation of estimation accuracy.

Estimation accuracy is high?

Calculation of control constant by use of the obtained model.

END

# Fig.8

Fig.9

# Fig.10

Manipulated variable MV

Process variable PV

22

27    28

Preprocessing means — 31

311

34    35

312 — Process model

Comparing means — 314

313 — Gain operation means

Internal parameter adjusting means — 315

# Fig.11

Start at a predetermined period

Calculation instruction means 26 reads process variable (PV) and manipulated variable (MV).

Changes of PV and MV are large? — No → END

Yes

DC and noise components are eliminated from time series data {PV},{MV} by filtering.

$PV_F, MV_F$

Calculation for model output.

Calculation for model gain $K_M$.

Maximum repetition times. — Yes

No

$|PV_F - K_M \cdot O_n|$ is enough small? — No → Correction of $L_M, \beta_M$ so as to minimize the difference between $PV_F$ and $K_M \cdot O_n$.

Yes

Repetition times ←+1

Calculation of estimation accuracy.

Estimation accuracy is high? — No

Yes

Calculation of control constant by use of the obtained model.

END

Fig.12

EP 0 417 593 B1

# Fig.13

EP 0 417 593 B1

# Fig.14

EP 0 417 593 B1

# Fig.15

Start at a predetermined period

Initial start — Yes / No

Appling a step input to process

Monitoring of process variable

**Step=1**

PV≥1% — Yes / No

- Measurement of time $t_1$
- Calculation of sampling period $t_s$

**Step=2**

PV≥2% — Yes / No

Measurement of time $t_2$

$T_2 > 2 * t_1$

- Correction of sampling period $t_s$
  $t_s = t_2 / 4$
- Correction of the gathered data by use of new $t_s$

**Step=3**

Process variable is set, or enough time elapses. — Yes / No

Data gathering ends.

Arrangement of time series signals {PV}, {MV}

- Model calculation
- Control parameter calculation

END

EP 0 417 593 B1

# Fig.16 (a)

Non-Integral type process

# Fig.16 (b)

Integral type process

# Fig.17

SV → DV → Control operation means (20) → MV → Process (21) → PV

Calculation Instruction means (26)

Step signal generating means (51)

Instruction means (50)

Control operation—parameter operating means (25)

Data gathering means (22)

27  28

TRG

234
Comparing means

Process model (232)

MO
23

Model parameter search means (233)

29

EP 0 417 593 B1

# Fig.18

```
                    ┌─────────────────────────┐
                    │  Start (Control cycle)  │
                    └─────────────────────────┘
                                 │
      Step1          ◇─────────────────────────◇   No
                     │  Is instruction applied? │──────┐
                     ◇─────────────────────────◇      │
                                 │ Yes                 │
      Step2          ┌─────────────────────────┐      │
                     │   Step signal output    │      │
                     └─────────────────────────┘      │
                                 │◄───────────────────┘
      Step3          ┌─────────────────────────┐
                     │  Gathering of MV.PV data │
                     └─────────────────────────┘
                                 │
      Step4          ◇─────────────────────────◇   No
                     │  Identification period?  │──────┐
                     ◇─────────────────────────◇      │
                                 │ Yes                 │
      Step5          ◇─────────────────────────◇   No │
                     │      MV.PV exceed        │──────┤
                     │  a predetermined value?  │      │
                     ◇─────────────────────────◇      │
                                 │ Yes                 │
                                                Step6  │
                     ┌─────────────────────────┐      │
                     │ Calculation of preocess  │      │
                     │   model output MO        │      │
                     └─────────────────────────┘      │
      Step9                      │                     │
     ┌───────────┐  ┌─────────────────────────┐      │
     │Correction │  │  Search for process      │      │
     │of model   │  │    model parameter       │      │
     │parameters │  └─────────────────────────┘      │
     │Kм.Lм.βм   │           Step7 │                  │
     └───────────┘                 │                  │
          │ No    ◇─────────────────────────◇         │
          └───────│      Difference          │        │
                  │      of the model        │        │
                  │      is small?      Step8 │        │
                  ◇─────────────────────────◇         │
                             │                         │
      Step10     ┌─────────────────────────┐          │
                 │ Calculation of PI        │          │
                 │ operation-parameter      │          │
                 └─────────────────────────┘          │
      Step11     ┌─────────────────────────┐          │
                 │ Setting of PI            │          │
                 │ operation-parameter      │          │
                 └─────────────────────────┘          │
                             │◄────────────────────────┘
                    ┌─────────────────┐
                    │     Return      │
                    └─────────────────┘
```

# Fig.19

(a) MV

▲ Instruction for generating step signal

(b) PV

EP 0 417 593 B1

# Fig.20

EP 0 417 593 B1

# Fig.21

Start at sampling period

Step1 — Filtering operation of PV by use of #2 band-pass filter

Step2 — Data gathering of output PVF from #2 band-pass filter and manipulated output MV

Step3 — Identification period? — No

Yes

Step4 — Change of PV,PVF is large? — No

Yes

Step5 — Calculation of preocess model output MO

Step6 — Filtering operation of model output MO by use of #1 band-pass filter

Correction of model parameters $K_M, L_M, \beta_M$

Search for process model parameter

Step9

Step7

Step8 — Difference of the model is small? — No

Step10 — Calculation of PI (D) operation-parameter

Step11 — Setting of PI (D) operation-parameter

END

35